# EUROPÄISCHE PATENTSCHRIFT

(11) **EP 3 837 855 B1**
(45) Veröffentlichungstag und Bekanntmachung des Hinweises auf die Patenterteilung: **16.08.2023**
(21) Anmeldenummer: 19734715.6
(22) Anmeldetag: 18.06.2019
(51) Int. Cl.: H04R 1/02, H04R 5/02, F21V 33/00, B60Q 9/00, F21Y 115/10

(54) **LAUTSPRECHER MIT EINEM DARIN ENTHALTENEN LEUCHTELEMENT**
LOUDSPEAKER WITH A LIGHTING ELEMENT CONTAINED THEREIN
HAUT-PARLEUR CONTENANT UN ÉLÉMENT LUMINEUX

(30) Priorität: 14.08.2018 DE 102018213662
(43) Veröffentlichungstag der Anmeldung: 23.06.2021
(73) Patentinhaber: Robert Bosch GmbH, 70442 Stuttgart (DE)
(72) Erfinder: SCHOENHERR, Michael, 71272 Renningen-Malmsheim (DE); HALLER, Achim, 71554 Weissach Im Tal-Oberweissach (DE); GRELAUD, Mathieu, 71638 Ludwigsburg (DE)
(86) Internationale Anmeldenummer: PCT/EP2019/066030
(87) Internationale Veröffentlichungsnummer: WO 2020/035195

(56) Entgegenhaltungen:
- WO-A1-2016/058652
- DE-B3-102005 052 767
- KR-A- 20090 061 900

## Beschreibung

### Stand der Technik

Aus der DE 10 2006 050 764 A1 ist ein Motorrad mit einer Anzeigeeinrichtung bekannt. Dabei überwacht eine Elektronik mindestens einen Zustandsparameter und bei Vorliegen eines vordefinierten Zustandsparameters wird ein Signal erzeugt, wobei das Signal eine Anzeigeeinrichtung ansteuert. Zumindest ein Teil der Anzeigeeinrichtung ist in ein Windschild des Motorrads integriert oder durch das Windschild gebildet. Weiterer relevanter Stand der Technik findet sich in den Dokumenten DE 10 2005 052767, WO 2016/058652 und KR 2009 0061900.

### Offenbarung der Erfindung

Die Erfindung betrifft einen Lautsprecher gemäß Anspruch 1.

Vorteilhafte Ausgestaltungen sind in den abhängigen Ansprüchen angegeben.

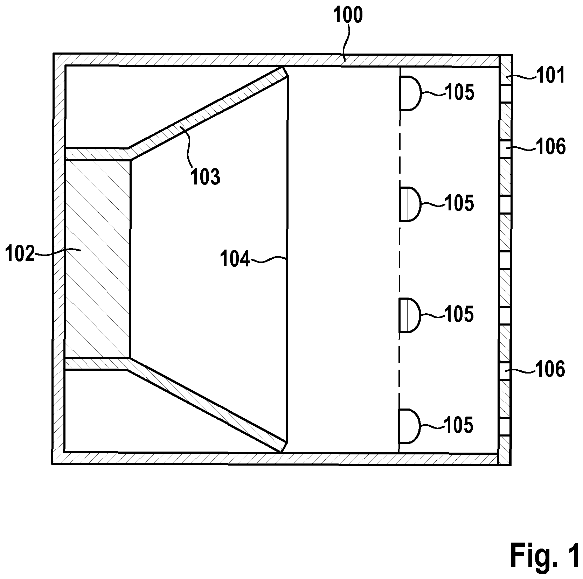

Die Zeichnung umfasst Figur 1.

Fig. 1 zeigt in Seitenansicht den schematischen Aufbau eines auf der Erfindung basierenden Lautsprechers.

Die Erfindung befasst sich mit der Integration eines visuellen Anzeigeinstruments in einen Lautsprecher insbesondere bei einem einspurigen Kraftfahrzeug, insbesondere einem Motorrad. Dabei kann es sich z.B. um den Lautsprecher eines in oder neben dem Kombiinstrument angebrachten Radios oder eines anderen akustischen Informationsgebers handeln. Übliche Lautsprecher weisen eine gitterförmige Abdeckung auf, welche auch als Grill bezeichnet wird. Durch die Öffnungen des Grills dringt das akustische Signal des Lautsprechers nach außen. Diese Öffnungen eignen sich zugleich dafür, optische bzw. visuelle Signale, welche im Inneren des Lautsprechers erzeugt werden, nach außen dringen zu lassen und damit den Fahrer neben den akustischen Informationen des Lautsprechers auch mit visuellen Informationen zu versorgen. Dazu können beispielsweise zwischen der Membran des Lautsprechers und dem Grill optische Leuchtmittel angebracht werden, welche in leuchtendem Zustand durch den Grill hindurch von außen sichtbar sind, in passivem bzw. dunklem Zustand jedoch vom Fahrer nicht gesehen werden. Diese Leuchtmittel können ebenfalls in einer gitterförmigen Struktur angeordnet sein, welche innerhalb des Lautsprechers derart angebracht ist, dass die einzelnen Leuchtelemente unterhalb der einzelnen Öffnungen des Grills angebracht sind und somit im leuctneden Zustand alle sichtbar sind. Durch eine individuelle Ansteuerung einzelner Leuchtelemente können somit auch Muster, Symbole oder Zahlen nachgebildet werden und dem Fahrer mitgeteilt werden. Die Leuchtelemente können auch blinkend oder mit unterschiedlichen Farben angesteuert werden.

In Fig. 1 ist der seitliche Querschnitt eines Lautsprechers dargestellt. 100 kennzeichnet das Gehäuse des Lautsprechers 103, dessen Schallwellen insbesondere durch den Grill 101 nach außen abgestrahlt werden. Der Magnet des Lautsprechers ist mit 102 gekennzeichnet, 104 bezeichnet die Membran, welche eine Schallerzeugungsfläche bildet und an den Rändern an des Lautsprechers 103 befestigt bzw. eingespannt ist. Zwischen der schallerzeugenden Membran 104 und dem Grill 101 mit den Löchern 106, durch welche der Schallaustritt aus dem Gehäuse erfolgt, befindet sich eine Schicht mit Leuchtelementen 105. Im dargestellten Querschnitt sind 4 Leuchtelemente 105 dargestellt, welche jeweils mittig unterhalb einer Schallaustrittsöffnung 106 positioniert sind. Im nichtaktivierten Zustand sind diese Leuchtelemente dunkel und können von außen durch den Grill hindurch nicht oder kaum wahrgenommen werden. Im aktivierten bzw. leuchtenden Zustand sind die optischen Signale der Leuchtelemente von außen durch die Öffnungen des Grills sichtbar. Ein derartiger Lautsprecher ist beispielsweise für Motorräder geeignet, welche seitlich neben dem Kombielement einen Lautsprecher mit einem dem Fahrer zugewandten Grill aufweisen. Damit kann der Lautsprecher gleichzeitig benutzt werden, um dem Fahrer visuelle Informationen oder Warnungen zukommen zu lassen , ohne dass am Kombiinstrument ein zusätzlicher Platz für eine Warnlampe vorgesehen werden muss.

## Patentansprüche

1. Lautsprecher (103), enthaltend ein Schallerzeugungselement (104) sowie einen vor dem Schallerzeugungselement (104) als Abdeckung angebrachten Grill (101), welcher optisch transparente Bereiche (106) aufweist, wobei zwischen dem Schallerzeugungselement (104) und dem Grill (101) wenigstens ein Leuchtelement (105) angebracht ist, welches im Leuchtfall durch die optisch transparenten Bereiche (106) des Grills (101) hindurch sichtbar ist, wobei der Grill (101) eine gitterförmige Gitterstruktur aufweist, **dadurch gekennzeichnet, dass** eine Mehrzahl von Leuchtelementen (105) vorliegt, welche in einer gitterförmigen Gitterstruktur angeordnet sind, wobei die Gitterabstände der Gitterstruktur der Leuchtelemente den Gitterabständen der Gitterstruktur des Grills (101) entsprechen.

2. Lautsprecher nach Anspruch 1, **dadurch gekennzeichnet, dass** es sich bei dem Schallerzeugungselement (104) um eine Membran handelt.

3. Lautsprecher nach Anspruch 1, **dadurch gekennzeichnet, dass** es sich bei dem wenigstens einen Leuchtelement (105) um eine Leuchtdiode handelt.

4. Lautsprecher nach Anspruch 1, **dadurch gekennzeichnet, dass** dieser als Anzeigeinstrument für den Fahrer in einem Kraftfahrzeug verwendet wird.

5. Lautsprecher nach Anspruch 4, **dadurch gekennzeichnet, dass** es sich bei dem Kraftfahrzeug um ein einspuriges Kraftfahrzeug handelt.

## Claims

1. Loudspeaker (103), comprising a sound-generating element (104) and a grille (101) mounted as a cover in front of the sound-generating element (104), the grille having optically transparent regions (106), at least one lighting element (105) being mounted between the second-generating element (104) and the grille (101) and, in the case of illumination, being visible through the optically transparent regions (106) of the grille (101), the grille (101) having a grid-like lattice structure, **characterized in that** a plurality of lighting elements (105) arranged in a grid-like lattice structure are present, the lattice spacings of the lattice structure of the lighting elements corresponding to the lattice spacings of the lattice structure of the grille (101).

2. Loudspeaker according to Claim 1, **characterized in that** the sound-generating element (104) is a diaphragm.

3. Loudspeaker according to Claim 1, **characterized in that** the at least one lighting element (105) is a light-emitting diode.

4. Loudspeaker according to Claim 1, **characterized in that** it is used as a display instrument for the driver in a motor vehicle.

5. Loudspeaker according to Claim 4, **characterized in that** the motor vehicle is a single-track motor vehicle.

## Revendications

1. Haut-parleur (103), contenant un élément générateur de son (104) et une grille (101) qui est montée à recouvrement devant l'élément générateur de son (104) et qui comporte des zones optiquement transparentes (106), au moins un élément d'éclairage (105) étant monté entre l'élément générateur de son (104) et la grille (101) et étant visible à travers les zones optiquement transparentes (106) de la grille (101) lorsqu'il est allumé, la grille (101) présentant une structure tramée en forme de treillis, **caractérisé en ce qu'**une pluralité d'éléments d'éclairage (105) sont présents qui sont disposés dans une structure tramée en forme de treillis, les intervalles de trame de la structure tramée des éléments d'éclairage correspondant aux intervalles de trame de la structure tramée de la grille (101).

2. Haut-parleur selon la revendication 1, **caractérisé en ce que** l'élément générateur de son (104) est une membrane.

3. Haut-parleur selon la revendication 1, **caractérisé en ce que** l'au moins un élément d'éclairage (105) est une diode électroluminescente.

4. Haut-parleur selon la revendication 1, **caractérisé en ce qu'**il est utilisé dans un véhicule automobile comme instrument d'affichage pour le conducteur.

5. Haut-parleur selon la revendication 4, **caractérisé en ce que** le véhicule automobile est un véhicule automobile monovoie.
